# EUROPÄISCHE PATENTSCHRIFT

(11) **EP 4 288 313 B1**
(45) Veröffentlichungstag und Bekanntmachung des Hinweises auf die Patenterteilung: **11.12.2024**
(21) Anmeldenummer: 22702231.6
(22) Anmeldetag: 25.01.2022
(51) Int. Cl.: B60T 13/74, B60T 11/16

(54) **BETÄTIGUNGSEINRICHTUNG FÜR EINE BREMSANLAGE**
ACTUATION DEVICE FOR A BRAKE SYSTEM
DISPOSITIF D'ACTIONNEMENT POUR SYSTÈME DE FREINAGE

(30) Priorität: 05.02.2021 DE 102021201079
(43) Veröffentlichungstag der Anmeldung: 13.12.2023
(73) Patentinhaber: Robert Bosch GmbH, 70442 Stuttgart (DE)
(72) Erfinder: GREINER, Matthias, 75397 Simmozheim (DE)
(86) Internationale Anmeldenummer: PCT/EP2022/051575
(87) Internationale Veröffentlichungsnummer: WO 2022/167265

(56) Entgegenhaltungen:
- WO-A1-01/38152
- DE-A1- 102016 113 802
- US-A1- 2020 339 089

## Beschreibung

Die Erfindung betrifft eine Betätigungseinrichtung für eine Bremsanlage, mit einem Elektromotor, der dazu ausgebildet ist, eine um eine Rotationsachse drehbar gelagerte Antriebswelle anzutreiben, mit einem Gehäuse, und mit einem Hauptbremszylinder, der mit dem Gehäuse starr verbunden ist, wobei in dem Hauptbremszylinder zumindest ein Hydraulikkolben verschiebbar gelagert ist, und wobei die Antriebswelle derart mit dem Hydraulikkolben gekoppelt ist, dass der Hydraulikkolben durch eine Drehung der Antriebswelle verschiebbar ist.

Außerdem betrifft die Erfindung eine Bremsanlage mit einer derartigen Betätigungseinrichtung.

### Stand der Technik

Eine hydraulische Bremsanlage eines Kraftfahrzeugs weist in der Regel mehrere Reibbremseinrichtungen auf. Zur Betätigung der Reibbremseinrichtungen ist üblicherweise eine Betätigungseinrichtung mit einem Hauptbremszylinder vorgesehen, in dem zumindest ein Hydraulikkolben verschiebbar gelagert ist. Der Hauptbremszylinder ist dabei mit Nehmerzylindern der Reibbremseinrichtungen derart fluidtechnisch verbunden, dass die Reibbremseinrichtungen durch eine Verschiebung des Hydraulikkolbens betätigbar sind.

Immer häufiger werden im Kraftfahrzeugbau elektromechanische Betätigungseinrichtungen verbaut. Eine derartige Betätigungseinrichtung ist beispielsweise aus der Offenlegungsschrift WO 2017 108 228 A1 bekannt. Die Betätigungseinrichtung weist einen Elektromotor auf, der dazu ausgebildet, eine um eine Rotationsachse drehbar gelagerte Antriebswelle anzutreiben. Die Antriebswelle ist derart mit dem Hydraulikkolben gekoppelt, dass der Hydraulikkolben durch eine Drehung der Antriebswelle verschiebbar ist. Der Hydraulikkolben ist also mittels der Antriebswelle durch den Elektromotor verschiebbar, sodass letztlich die Reibbremseinrichtungen durch den Elektromotor betätigbar sind. Die Betätigungseinrichtung weist zudem ein Gehäuse auf, wobei der Hauptbremszylinder mit dem Gehäuse starr verbunden ist. Typischerweise ist in vorbekannten elektromechanischen Betätigungseinrichtungen der Elektromotor außerhalb des Gehäuses angeordnet, mit dem der Hauptbremszylinder starr verbunden ist.

Die Offenlegung DE 10 2016 113802 A1 befasst sich mit einem Kraftunterstützungssystem das einen Motor mit einer Rotorwelle, eine Antriebsriemenscheibe, die an der Rotorwelle angebracht ist, eine angetriebene Riemenscheibe, einen flexiblen Riemen, der ausgestaltet ist, um die Antriebsriemenscheibe mit der angetriebenen Riemenscheibe zu verbinden, und eine Kugelrollspindelanordnung enthält. Die Kugelrollspindelanordnung enthält eine drehbare Kugelrollspindel, die zusammen mit der angetriebenen Riemenscheibe drehbar ist, eine Spindelmutter mit linearer Übersetzung, die die Kugelrollspindel umgibt, und eine Antirotationsvorrichtung, die angeordnet ist, um eine Drehung der Spindelmutter zu verhindern.

### Offenbarung der Erfindung

Die erfindungsgemäße Betätigungseinrichtung mit den Merkmalen des Anspruchs 1 hat den Vorteil, dass die Betätigungseinrichtung besonders kompakt und somit bauraumsparend ausgebildet ist. Erfindungsgemäß ist hierzu vorgesehen, dass der Elektromotor in dem Gehäuse angeordnet ist, und dass die starre Verbindung des Hauptbremszylinders mit dem Gehäuse zumindest anteilig durch die Antriebswelle bereitgestellt wird. Der Elektromotor ist also erfindungsgemäß in dem Gehäuse angeordnet, mit dem der Hauptbremszylinder starr verbunden ist. Aufgrund der Anordnung in dem Gehäuse ist der Elektromotor durch das Gehäuse geschützt, sodass auf ein zusätzliches Motorgehäuse verzichtet werden kann. Vorzugsweise ist der Elektromotor motorgehäusefrei ausgebildet. Hierdurch werden zusätzlich zu der Einsparung von Bauraum für die Betätigungseinrichtung auch Kosten eingespart.

Der Hauptbremszylinder ist erfindungsgemäß mit dem Gehäuse starr verbunden beziehungsweise an dem Gehäuse starr befestigt. Unter einer starren Verbindung zwischen zwei Körpern ist dabei eine Verbindung zu verstehen, die keine Relativbewegung der Körper zueinander zulässt. Insofern ist die starre Verbindung des Hauptbremszylinders mit dem Gehäuse beispielsweise dazu ausgebildet, sowohl Axialkräfte als auch Radialkräfte zu übertragen. Werden in der Offenbarung die Begriffe "axial" und "radial" verwendet, so beziehen sich diese Begriffe auf die Rotationsachse der Antriebswelle, es sei denn, dass ausdrücklich ein anderer Bezug für die Begriffe offenbart ist. Unter einer Axialkraft ist also eine Kraft zu verstehen, die parallel zu der Rotationsachse ausgerichtet ist. Unter einer Radialkraft ist entsprechend eine Kraft zu verstehen, die senkrecht zu der Rotationsachse ausgerichtet ist. Vorzugsweise ist der Hydraulikkolben entlang einer Verschiebeachse verschiebbar, die parallel zu der Rotationsachse der Antriebswelle ausgerichtet ist. Erfindungsgemäß wird die starre Verbindung des Gehäuses mit dem Hauptbremszylinder zumindest anteilig durch die Antriebswelle bereitgestellt beziehungsweise bewirkt. Wird beispielsweise der Hauptbremszylinder mit einer Axialkraft beaufschlagt, so wird diese Axialkraft zumindest anteilig mittels der Antriebswelle auf das Gehäuse übertragen. Weil die starre Verbindung des Gehäuses mit dem Hauptbremszylinder zumindest anteilig durch die Antriebswelle bereitgestellt wird, können sonstige Elemente eingespart werden, durch die üblicherweise in vorbekannten Betätigungseinrichtungen die starre Verbindung anteilig bereitgestellt wird. Auch daraus ergibt sich die bauraumsparende Ausbildung der erfindungsgemäßen Betätigungseinrichtung.

Vorzugsweise weist die Betätigungseinrichtung ein zur Übertragung von Axialkräften ausgebildetes erstes Lager auf, das einen ersten Lagerring und einen zweiten Lagerring aufweist, wobei der erste Lagerring mit dem Hauptbremszylinder starr verbunden ist, und wobei der zweite Lagerring mit der Antriebswelle starr verbunden ist. Die starre Verbindung des Gehäuses mit dem Hauptbremszylinder wird also zumindest anteilig durch das erste Lager bereitgestellt. Wird der Hauptbremszylinder mit einer Axialkraft beaufschlagt, so wird diese Axialkraft mittels des ersten Lagerrings und des zweiten Lagerrings auf die Antriebswelle übertragen. Mittels des ersten Lagers können trotz drehbarer Lagerung der Antriebswelle ausreichend hohe Axialkräfte auf die Antriebswelle übertragen werden. Vorzugsweise handelt es sich bei dem ersten Lagerring um einen äußeren Lagerring des ersten Lagers. Entsprechend handelt es sich dann bei dem zweiten Lagerring um einen inneren Lagerring des ersten Lagers. Vorzugsweise ist der zweite Lagerring durch eine Presspassung mit der Antriebswelle verbunden. Vorzugsweise ist der zweite Lagerring mit einem ersten Endabschnitt der Antriebswelle verbunden. Besonders bevorzugt ist das erste Lager außerhalb des Gehäuses angeordnet. Entsprechend weist die Antriebswelle einen Abschnitt auf, der aus dem Gehäuse herausragt.

Vorzugsweise weist die Betätigungseinrichtung ein zur Übertragung von Axialkräften ausgebildetes zweites Lager auf, das einen dritten Lagerring und einen vierten Lagerring aufweist, wobei der dritte Lagerring gehäusefest angeordnet ist, und wobei der vierte Lagerring mit der Antriebswelle starr verbunden ist. Die starre Verbindung des Gehäuses mit dem Hauptbremszylinder wird also zumindest anteilig durch das zweite Lager bereitgestellt. Wird die Antriebswelle mit einer Axialkraft beaufschlagt, so wird diese Axialkraft mittels des vierten Lagerrings und des dritten Lagerrings auf das Gehäuse übertragen. Mittels des zweiten Lagers können trotz drehbarer Lagerung der Antriebswelle ausreichend hohe Axialkräfte von der Antriebswelle auf das Gehäuse übertragen werden. Vorzugsweise handelt es sich bei dem dritten Lagerring um einen äußeren Lagerring des zweiten Lagers. Entsprechend handelt es sich dann bei dem vierten Lagerring um einen inneren Lagerring des zweiten Lagers. Vorzugsweise ist der vierte Lagerring durch eine Presspassung mit der Antriebswelle verbunden. Vorzugsweise ist der vierte Lagerring mit einem zweiten Endabschnitt der Antriebswelle verbunden. Ist das erste Lager im Bereich des ersten Endabschnitts der Antriebswelle mit der Antriebswelle verbunden und das zweite Lager im Bereich des zweiten Endabschnitts der Antriebswelle, so ist der Elektromotor axial zwischen dem ersten Lager einerseits und dem zweiten Lager andererseits angeordnet. Hierdurch wird eine stabile drehbare Lagerung der Antriebswelle mittels der beiden Lager erreicht.

Gemäß einer bevorzugten Ausführungsform ist vorgesehen, dass das erste Lager und/oder das zweite Lager als Wälzkörperlager, insbesondere Kegelrollenlager, ausgebildet sind. Durch derartige Lager wird zum einen eine reibungsarme Drehung der Antriebswelle ermöglicht. Zum anderen können durch derartige Lager ausreichend hohe Axialkräfte übertragen werden. Im Hinblick auf die Übertragung hoher Axialkräfte ist die Ausbildung der Lager als Kegelrollenlager besonders vorteilhaft.

Vorzugsweise weist das Gehäuse eine becherförmige Vertiefung auf, wobei das zweite Lager in der Vertiefung angeordnet ist. Durch das Vorsehen der Vertiefung und die Anordnung des zweiten Lagers in der Vertiefung kann eine besonders stabile Verbindung des dritten Lagerrings mit dem Gehäuse erreicht werden. Vorzugsweise ist der dritte Lagerring in die Vertiefung eingepresst. Der dritte Lagerring ist also durch eine Presspassung mit dem Gehäuse verbunden, die zwischen einer Mantelwand der Vertiefung und einer Mantelwand des dritten Lagerrings wirkt.

Vorzugsweise weist der Hauptbremszylinder einen Anschlussflansch auf, wobei der erste Lagerring mit dem Anschlussflansch starr verbunden ist. Durch den Anschlussflansch kann eine stabile Verbindung des Hauptbremszylinders mit dem Gehäuse bereitgestellt werden. Vorzugsweise weist der Anschlussflansch einen Axialdurchbruch auf, in dem das erste Lager angeordnet ist. Vorzugsweise ist der erste Lagerring durch eine Presspassung mit dem Anschlussflansch verbunden, die zwischen einer Mantelwand des Axialdurchbruchs und einer Mantelwand des ersten Lagerrings wirkt.

Vorzugsweise weist die Betätigungseinrichtung ein Steuergerät zur Ansteuerung des Elektromotors auf, wobei der Anschlussflansch axial zwischen dem Elektromotor einerseits und dem Steuergerät andererseits angeordnet ist. Diese Anordnung des Steuergerätes ist besonders vorteilhaft. Zum einen befindet sich das Steuergerät bei einer derartigen Anordnung in räumlicher Nähe zu dem Elektromotor, wodurch eine elektrische Anbindung des Steuergerätes an den Elektromotor technisch einfach möglich ist. Zum anderen wird das Steuergerät durch die räumliche Nähe zu dem Anschlussflansch im Betrieb durch den Anschlussflansch entwärmt beziehungsweise gekühlt. Vorzugsweise liegt das Steuergerät, insbesondere ein Steuergerätgehäuse des Steuergerätes, axial direkt an dem Anschlussflansch an.

Gemäß einer bevorzugten Ausführungsform ist vorgesehen, dass das Steuergerät durch zumindest eine elektrische Leitung mit einer Motorwicklung des Elektromotors elektrisch verbunden ist, wobei der Anschlussflansch einen Axialdurchbruch aufweist, durch den sich die Leitung hindurch erstreckt. Die Leitung verläuft also durch den Anschlussflansch hindurch. Dadurch ist die Leitung durch den Anschlussflansch geschützt und die elektrische Verbindung des Steuergerätes mit der Motorwicklung wird insofern vereinfacht, als dass die Leitung nicht um den Anschlussflansch herum geführt werden muss.

Vorzugsweise weist die Betätigungseinrichtung zumindest einen Sicherungsring auf, der zur axialen Sicherung der Antriebswelle radial in eine Umfangsnut der Antriebswelle eingreift. Hierdurch wird die Höhe der Axialkräfte, die durch die Antriebswelle übertragen werden können, gesteigert. Vorzugsweise liegt der Sicherungsring axial direkt an dem zweiten Lagerring des ersten Lagers oder dem vierten Lagerring des zweiten Lagers an. Besonders bevorzugt ist der Sicherungsring auf einer von dem zweiten Lager abgewandten Seite des ersten Lagers angeordnet und liegt axial direkt an dem zweiten Lagerring des ersten Lagers an. Vorzugsweise weist die Betätigungseinrichtung dann einen weiteren Sicherungsring auf, der zur axialen Sicherung der Antriebswelle radial in eine weitere Umfangsnut der Antriebswelle eingreift, auf einer von dem ersten Lager abgewandten Seite des zweiten Lagers angeordnet ist und axial direkt an dem vierten Lagerring des zweiten Lagers anliegt.

Vorzugsweise weist die Betätigungseinrichtung ein Betätigungselement auf, das in dem Gehäuse verschiebbar geführt ist, wobei die Führung des Betätigungselementes zumindest anteilig durch den Elektromotor bereitgestellt wird. Unter dem Betätigungselement ist ein Element zu verstehen, das derart mit dem Hydraulikkolben gekoppelt ist, dass der Hydraulikkolben durch eine Verschiebung des Betätigungselementes verschiebbar ist. Vorzugsweise ist die Antriebswelle mittels des Betätigungselementes mit dem Hydraulikkolben gekoppelt. Weil die Führung des Betätigungselementes zumindest anteilig durch den Elektromotor bereitgestellt wird, ist höchstens eine geringe Anzahl sonstiger Bauteile für die Führung des Betätigungselementes notwendig.

Vorzugsweise weist die Betätigungseinrichtung eine mit dem Betätigungselement starr verbundene Drehsicherungsplatte auf, wobei ein gehäusefestes Element des Elektromotors einen Führungsvorsprung aufweist, der zur Führung des Betätigungselementes radial in eine Aussparung der Drehsicherungsplatte eingreift. Hierdurch wird eine sichere Führung des Betätigungselementes erreicht. Vorzugsweise weist der Führungsvorsprung eine Beschichtung auf, durch die eine Reibung zwischen dem Führungsvorsprung und der Drehsicherungsplatte verringert wird. Gemäß einem weiteren Ausführungsbeispiel weist die Drehsicherungsplatte einen Führungsvorsprung auf, der zur Führung des Betätigungselementes radial in eine Aussparung des gehäusefesten Elementes des Elektromotors eingreift.

Vorzugsweise weist die Betätigungseinrichtung eine Zugstange auf, wobei die starre Verbindung des Gehäuses mit dem Hauptbremszylinder sowie die Führung des Betätigungselementes jeweils anteilig durch die Zugstange bereitgestellt werden. Durch das Vorsehen der Zugstange werden die Stabilität der starren Verbindung des Gehäuses mit dem Hauptbremszylinder sowie die Stabilität der Führung des Betätigungselementes gesteigert. Vorzugsweise weist die Betätigungseinrichtung genau eine wie vorstehend beschrieben ausgebildete Zugstange auf.

Gemäß einer bevorzugten Ausführungsform ist vorgesehen, dass eine Längsmittelachse des Hauptbremszylinders, eine Längsmittelachse der Zugstange und die Rotationsachse der Antriebswelle parallel zueinander ausgerichtet sind und in derselben Ebene liegen, wobei der Hauptbremszylinder radial zwischen der Zugstange einerseits und der Antriebswelle andererseits angeordnet ist. Durch eine derartige Ausgestaltung werden Axialkräfte, die auf den Hauptbremszylinder wirken, vorteilhaft auf die Zugstange und die Antriebswelle aufgeteilt.

Die erfindungsgemäße Bremsanlage zeichnet sich mit den Merkmalen des Anspruchs 14 durch die erfindungsgemäße Betätigungseinrichtung aus. Auch daraus ergeben sich die bereits genannten Vorteile. Weitere bevorzugte Merkmale und Merkmalskombinationen ergeben sich aus der Beschreibung sowie aus den Ansprüchen. Vorzugsweise weist die Bremsanlage zumindest eine Reibbremseinrichtung auf, die fluidtechnisch derart mit dem Hauptbremszylinder verbunden ist, dass die Reibbremseinrichtung durch eine Verschiebung des Hydraulikkolbens betätigbar ist.

Im Folgenden wird die Erfindung anhand der Zeichnungen näher erläutert. Dazu zeigen
- Figur 1: eine Schnittdarstellung einer Betätigungseinrichtung für eine Bremsanlage und
- Figur 2: eine Draufsicht auf die Betätigungseinrichtung.

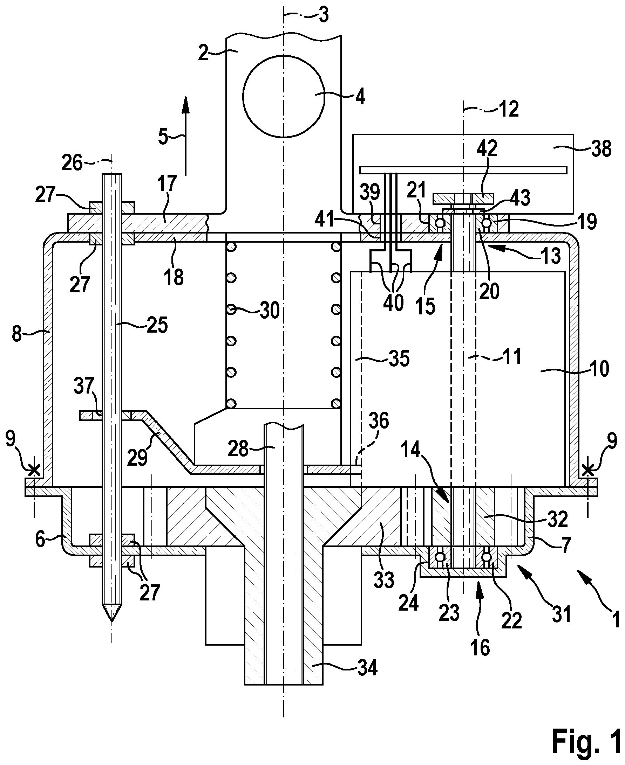

Figur 1 zeigt eine Schnittdarstellung einer Betätigungseinrichtung 1 für eine hydraulische Bremsanlage eines Kraftfahrzeugs. Die Betätigungseinrichtung 1 weist einen Hauptbremszylinder 2 auf. In dem Hauptbremszylinder 2 ist zumindest ein nicht dargestellter Hydraulikkolben entlang einer Verschiebeachse 3 axial verschiebbar gelagert. Vorliegend handelt es sich bei dem Hauptbremszylinder 2 um einen Tandem-Hauptbremszylinder 2. Entsprechend sind in dem Hauptbremszylinder 2 zwei Hydraulikkolben axial hintereinander verschiebbar gelagert. Die Verschiebeachse 3 entspricht dabei der Längsmittelachse 3 des Hauptbremszylinders 2. Ist die Betätigungseinrichtung 1 als Teil der Bremsanlage in dem Kraftfahrzeug montiert, so ist der Hauptbremszylinder 2 durch mehrere Hydraulikanschlüsse, von denen in Figur 1 lediglich ein einziger Hydraulikanschluss 4 dargestellt ist, derart mit Nehmerzylindern von Reibbremseinrichtungen der Bremsanlage verbunden, dass die Reibbremseinrichtungen durch eine Verschiebung der Hydraulikkolben in eine Betätigungseinrichtung 5 betätigbar sind.

Die Betätigungseinrichtung 1 weist außerdem ein Gehäuse 6 auf. Das Gehäuse 6 ist mehrteilig ausgebildet. Vorliegend weist das Gehäuse 6 einen Grundkörper 7 und eine Abdeckung 8 auf. Der Grundkörper 7 und die Abdeckung 8 sind durch Befestigungsmittel 9 miteinander starr verbunden.

Die Betätigungseinrichtung 1 weist außerdem einen Elektromotor 10 auf, der gehäusefest in dem Gehäuse 6 angeordnet ist. Der Elektromotor 10 ist dazu ausgebildet, eine Antriebswelle 11 anzutreiben, die um eine Rotationsachse 12 drehbar gelagert ist. Dabei ist die Rotationsachse 12 parallel zu der Verschiebeachse 3 ausgerichtet. Die Antriebswelle 11 ragt axial beidseitig über den Elektromotor 10 hinaus. Insofern weist die Antriebswelle 11 einen ersten Endabschnitt 13 auf, der axial auf der einen Seite des Elektromotors 10 angeordnet ist, und einen zweiten Endabschnitt 14, der axial auf der anderen Seite des Elektromotors 10 angeordnet ist. Zur drehbaren Lagerung der Antriebswelle 11 sind ein erstes Lager 15 und ein zweites Lager 16 vorgesehen. Dabei lagert das erste Lager 15 den ersten Endabschnitt 13 der Antriebswelle 11. Das zweite Lager 16 lagert den zweiten Endabschnitt 14 der Antriebswelle 11. Vorliegend sind die Lager 15 und 16 als Wälzkörperlager 15 und 16 ausgebildet.

Der Hauptbremszylinder 2 weist einen Anschlussflansch 17 auf. Der Anschlussflansch 17 liegt axial an einer Außenseite einer Wand 18 der Abdeckung 8 an, die senkrecht zu der Rotationsachse 12 ausgerichtet ist. Der Hauptbremszylinder 2 ist mit dem Gehäuse 6 starr verbunden beziehungsweise an dem Gehäuse starr befestigt. Insofern ist eine zwischen dem Hauptbremszylinder 2 einerseits und dem Gehäuse 6 andererseits wirkende Verbindung vorhanden, durch die sowohl Axialkräfte als auch Radialkräfte übertragbar sind. Wird beispielsweise der Hauptbremszylinder 2 mit einer in Betätigungsrichtung 5 wirkenden Axialkraft beaufschlagt, so wird diese Axialkraft auf das Gehäuse 6 übertragen.

Dabei wird die starre Verbindung des Hauptbremszylinders 2 mit dem Gehäuse 6 anteilig durch die Antriebswelle 11 bereitgestellt. Das erste Lager 15 und das zweite Lager 16 sind dazu ausgebildet, sowohl Axialkräfte als auch Radialkräfte zu übertragen. Das erste Lager 15 weist hierzu einen ersten Lagerring 19 und einen zweiten Lagerring 20 auf, wobei die Lagerringe 19 und 20 zueinander verdrehbar sind. Der erste Lagerring 19 ist mit dem Hauptbremszylinder 2 starr verbunden. Vorliegend ist der erste Lagerring 19 in einen ersten Axialdurchbruch 21 des Anschlussflansches 17 eingepresst. Der zweite Lagerring 20 ist mit der Antriebswelle 11 starr verbunden. Vorliegend ist die Antriebswelle 11 in den zweiten Lagerring 20 eingepresst. Das zweite Lager 16 weist einen dritten Lagerring 22 und einen vierten Lagerring 23 auf, wobei die Lagerringe 22 und 23 zueinander verdrehbar sind. Der dritte Lagerring 22 ist mit dem Gehäuse 6 starr verbunden. Vorliegend ist der dritte Lagerring 22 in eine becherförmige Vertiefung 24 des Grundkörpers 7 des Gehäuses 6 eingepresst. Der vierte Lagerring 23 ist mit der Antriebswelle 11 starr verbunden. Vorliegend ist die Antriebswelle 11 in den vierten Lagerring 23 eingepresst. Wird also der Hauptbremszylinder 2 mit einer in Betätigungseinrichtung 5 wirkenden Axialkraft beaufschlagt, so wird diese Axialkraft durch den ersten Lagerring 19, den zweiten Lagerring 20, die Antriebswelle 11, den vierten Lagerring 23 und den dritten Lagerring 22 auf das Gehäuse 6 übertragen.

Die Betätigungseinrichtung 1 weist außerdem eine Zugstange 25 auf. Die Zugstange 25 ist derart angeordnet, dass eine Längsmittelachse 26 der Zugstange 25 parallel zu der Rotationsachse 12 ausgerichtet ist. Die starre Verbindung des Hauptbremszylinders 2 mit dem Gehäuse 6 wird auch anteilig durch die Zugstange 25 bereitgestellt. Hierzu erstreckt sich die Zugstange 25 axial durch das Gehäuse 6 und den Anschlussflansch 17 hindurch und ist durch Axialanschläge 27 axial an dem Gehäuse 6 und dem Anschlussflansch 17 fixiert.

Die Betätigungseinrichtung 1 weist außerdem ein axial verschiebbar geführtes Betätigungselement 28 auf. Das Betätigungselement 28 ist derart mit den Hydraulikkolben gekoppelt, dass die Hydraulikkolben durch eine Verschiebung des Betätigungselementes 28 verschiebbar sind. Eine Drehsicherungsplatte 29 ist mit dem Betätigungselement 28 starr verbunden und insofern mit dem Betätigungselement 28 mitverschiebbar. Zudem weist die Betätigungseinrichtung 1 eine Rückstellfeder 30 auf, die sich axial an dem Hauptbremszylinder 2 einerseits und an dem Betätigungselement 28 oder einem mit dem Betätigungselement 28 starr verbundenen Element andererseits abstützt.

Die Antriebswelle 11 ist derart mit dem Betätigungselement 28 wirkverbunden, dass das Betätigungselement 28 durch eine Drehung der Antriebswelle 11 verschiebbar ist. Insofern sind die Hydraulikkolben durch den Elektromotor 10 verschiebbar. Hierzu weist die Betätigungseinrichtung 1 eine Getriebeeinrichtung 31 auf. Die Getriebeeinrichtung 31 weist ein erstes Zahnrad 32 auf, das drehfest mit der Antriebswelle 11 verbunden ist. Das erste Zahnrad 32 ist axial zwischen dem Elektromotor 10 einerseits und dem zweiten Lager 16 andererseits angeordnet. Das erste Zahnrad 32 ist dazu ausgebildet, mittels zumindest eines weiteren Zahnrads 33 der Getriebereinrichtung 31 eine Spindelmutter 34 der Getriebeeinrichtung 31 anzutreiben. Ein Außengewinde des Betätigungselementes 28 kämmt derart mit einem Innengewinde der Spindelmutter 34, dass das Betätigungselement 28 durch eine Drehung der Spindelmutter 34 verschiebbar ist.

Die Führung des Betätigungselementes 28 wird anteilig durch den Elektromotor 10 bereitgestellt. Vorliegend weist ein gehäusefestes Element des Elektromotors 10, beispielsweise ein Träger des Elektromotors 10, einen Führungsvorsprung 35 auf, der sich in axialer Richtung erstreckt. Die Drehsicherungsplatte 29 weist eine Aussparung 36 auf, die sich axial durch die Drehsicherungsplatte 29 hindurch erstreckt. Der Führungsvorsprung 35 greift zur Führung des Betätigungselementes 28 radial in die Aussparung 36 ein. Der Führungsvorsprung 35 weist eine in Figur 1 nicht dargestellte Beschichtung auf, durch die eine Reibung zwischen dem Führungsvorsprung 35 und der Drehsicherungsplatte 29 verringert wird. Gemäß einem weiteren Ausführungsbeispiel weist die Drehsicherungsplatte 29 einen Führungsvorsprung auf, der zur Führung des Betätigungselementes 28 radial in eine sich in axialer Richtung erstreckende Aussparung des Elektromotors 10 eingreift.

Die Führung des Betätigungselementes 28 wird zudem anteilig durch die Zugstange 25 bereitgestellt. Hierzu weist die Drehsicherungsplatte 29 einen Axialdurchbruch 37 auf, durch den die Zugstange 25 zur Führung des Betätigungselementes 28 axial hindurchgreift.

Die Betätigungseinrichtung 1 weist außerdem ein Steuergerät 38 zur Ansteuerung des Elektromotors 10 auf. Beispielsweise ist das Steuergerät 38 dazu ausgebildet, den Elektromotor 10 in Abhängigkeit von einem Sensorsignal eines nicht dargestellten Betätigungssensors der Betätigungseinrichtung 1 anzusteuern. Der Anschlussflansch 17 ist axial zwischen dem Elektromotor 10 einerseits und dem Steuergerät 38 andererseits angeordnet. Dabei liegt das Steuergerät 38 axial direkt an dem Anschlussflansch 17 an.

Der Anschlussflansch 17 weist einen zweiten Axialdurchbruch 39 auf, der axial mit einem Axialdurchbruch 41 der Abdeckung 8 fluchtet. Das Steuergerät 38 ist durch mehrere elektrische Leitungen 40 elektrisch mit einer Motorwicklung des Elektromotors 10 verbunden. Die elektrischen Leitungen 40 erstrecken sich durch den zweiten Axialdurchbruch 39 des Anschlussflansches 17 und durch den Axialdurchbruch 41 der Abdeckung 8 hindurch.

Um einen Drehwinkel der Antriebswelle 11 zu überwachen, ist ein Magnetelement 42 vorgesehen, das mit einem freien Ende des ersten Endabschnitts 13 der Antriebswelle 11 drehfest verbunden ist. Zudem ist ein nicht dargestellter Empfänger vorgesehen, der dazu ausgebildet ist, ein durch das Magnetelement 42 erzeugtes Magnetfeld zu erfassen. Hierzu liegt der Empfänger dem Magnetelement 42 beispielsweise radial oder axial gegenüber.

Um die Antriebswelle 11 axial zu sichern ist ein Sicherungsring 43 vorgesehen. Der Sicherungsring 43 greift radial in eine Umfangsnut der Antriebswelle 11 ein. Dabei ist der Sicherungsring 43 axial zwischen dem Magnetelement 42 einerseits und dem ersten Lager 15 andererseits angeordnet und liegt axial direkt an dem zweiten Lagerring 20 an. Gemäß einem weiteren Ausführungsbeispiel ragt die Antriebswelle 11 axial über das zweite Lager 16 hinaus. Vorzugsweise ist gemäß diesem Ausführungsbeispiel ein weiterer Sicherungsring vorgesehen, der auf einer von dem ersten Lager 15 abgewandten Seite des zweiten Lagers 16 angeordnet ist und axial direkt an dem vierten Lagerring 23 anliegt. Vorzugsweise greift der weitere Sicherungsring radial in eine weitere Umfangsnut der Antriebswelle 11 ein.

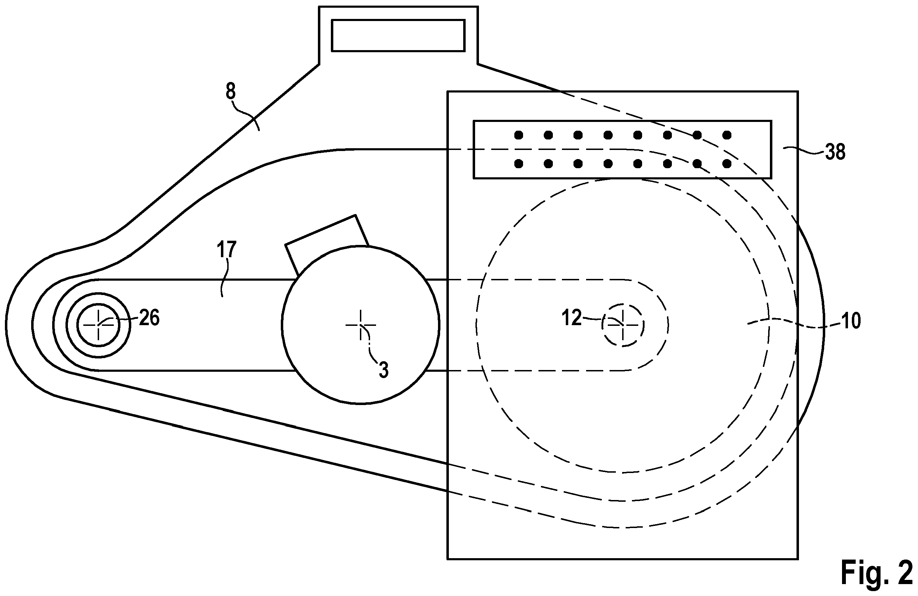

Figur 2 zeigt eine Draufsicht auf die Betätigungseinrichtung 1. Wie aus Figur 2 ersichtlich ist, sind der Hauptbremszylinder 2, die Zugstange 25 und die Antriebswelle 11 derart angeordnet, dass die Längsmittelachse 26 der Zugstange 25, die Längsmittelachse 3 des Hauptbremszylinder 2 und die Rotationsachse 12 der Antriebswelle 11 in derselben Ebene liegen. Dabei ist der Hauptbremszylinder 2 radial zwischen der Zugstange 25 und der Antriebswelle 11 angeordnet. Zudem sind die Längsmittelachse 26 der Zugstange 25 und die Rotationsachse 12 der Antriebswelle 11 in radialer Richtung gleichweit von der Längsmittelachse 3 des Hauptbremszylinders 2 beabstandet.

Weil die Antriebswelle 11 anteilig die starre Verbindung des Hauptbremszylinders 2 mit dem Gehäuse 6 bereitstellt, und weil der Elektromotor 10 anteilig die Führung des Betätigungselementes 28 bereitstellt, kann auf eine weitere Zugstange verzichtet werden, die typischerweise zusammen mit der Zugstange 25 die starre Verbindung sowie die Führung bereitstellen würde. Hierdurch ist die Betätigungseinrichtung 1 insgesamt bauraumsparend ausgebildet, wie aus Figur 2 ersichtlich ist.

## Patentansprüche

1. Betätigungseinrichtung (1) für eine Bremsanlage, mit einem Elektromotor (10), der dazu ausgebildet ist, eine um eine Rotationsachse (12) drehbar gelagerte Antriebswelle (11) anzutreiben, mit einem Gehäuse (6), und mit einem Hauptbremszylinder (2), der mit dem Gehäuse (6) starr verbunden ist, wobei in dem Hauptbremszylinder (2) zumindest ein Hydraulikkolben verschiebbar gelagert ist, und wobei die Antriebswelle (11) derart mit dem Hydraulikkolben gekoppelt ist, dass der Hydraulikkolben durch eine Drehung der Antriebswelle (11) verschiebbar ist wobei der Elektromotor (10) in dem Gehäuse (6) angeordnet ist, **dadurch gekennzeichnet, dass** die starre Verbindung des Hauptbremszylinders (2) mit dem Gehäuse (6) zumindest anteilig durch die Antriebswelle (11) bereitgestellt wird.

2. Betätigungseinrichtung nach Anspruch 1, **gekennzeichnet durch** ein zur Übertragung von Axialkräften ausgebildetes erstes Lager (15), das einen ersten Lagerring (19) und einen zweiten Lagerring (20) aufweist, wobei der erste Lagerring (19) mit dem Hauptbremszylinder (2) starr verbunden ist, und wobei der zweite Lagerring (20) mit der Antriebswelle (11) starr verbunden ist.

3. Betätigungseinrichtung nach einem der vorhergehenden Ansprüche, **gekennzeichnet durch** ein zur Übertragung von Axialkräften ausgebildetes zweites Lager (16), das einen dritten Lagerring (22) und einen vierten Lagerring (23) aufweist, wobei der dritte Lagerring (22) gehäusefest angeordnet ist, und wobei der vierte Lagerring (23) mit der Antriebswelle (11) starr verbunden ist.

4. Betätigungseinrichtung nach einem der Ansprüche 2 und 3, **dadurch gekennzeichnet, dass** das erste Lager (15) und/oder das zweite Lager (16) als Wälzkörperlager, insbesondere Kegelrollenlager, ausgebildet sind.

5. Betätigungseinrichtung nach einem der Ansprüche 2 bis 4, **dadurch gekennzeichnet, dass** das Gehäuse (6) eine becherförmige Vertiefung (24) aufweist, wobei das zweite Lager (16) in der Vertiefung (24) angeordnet ist.

6. Betätigungseinrichtung nach einem der Ansprüche 2 bis 5, **dadurch gekennzeichnet, dass** der Hauptbremszylinder (2) einen Anschlussflansch (17) aufweist, und dass der erste Lagerring (19) mit dem Anschlussflansch (17) starr verbunden ist.

7. Betätigungseinrichtung nach einem der vorhergehenden Ansprüche, **gekennzeichnet durch** ein Steuergerät (38) zur Ansteuerung des Elektromotors (10), wobei der Anschlussflansch (17) axial zwischen dem Elektromotor (10) einerseits und dem Steuergerät (38) andererseits angeordnet ist.

8. Betätigungseinrichtung nach Anspruch 7, **dadurch gekennzeichnet, dass** das Steuergerät (38) durch zumindest eine elektrische Leitung (40) mit einer Motorwicklung des Elektromotors (10) elektrisch verbunden ist, wobei der Anschlussflansch (17) einen Axialdurchbruch (39) aufweist, durch den sich die Leitung (40) hindurch erstreckt.

9. Betätigungseinrichtung nach einem der vorhergehenden Ansprüche, **gekennzeichnet durch** zumindest einen Sicherungsring (43), der zur axialen Sicherung der Antriebswelle (11) radial in eine Umfangsnut der Antriebswelle (11) eingreift.

10. Betätigungseinrichtung nach einem der vorhergehenden Ansprüche, **gekennzeichnet durch** ein Betätigungselement (28), das in dem Gehäuse (6) verschiebbar geführt ist, wobei die Führung des Betätigungselementes (28) zumindest anteilig durch den Elektromotor (10) bereitgestellt wird.

11. Betätigungseinrichtung nach Anspruch 10, **gekennzeichnet durch** eine mit dem Betätigungselement (28) starr verbundene Drehsicherungsplatte (29), wobei ein gehäusefestes Element des Elektromotors (10) einen Führungsvorsprung (35) aufweist, der zur Führung des Betätigungselementes (28) radial in eine Aussparung (36) der Drehsicherungsplatte (29) eingreift.

12. Betätigungseinrichtung nach einem der vorhergehenden Ansprüche, **dadurch gekennzeichnet, dass** die Betätigungseinrichtung (1) eine Zugstange (25) aufweist, wobei die starre Verbindung des Gehäuses (6) mit dem Hauptbremszylinder (2) sowie die Führung des Betätigungselementes (28) jeweils anteilig durch die Zugstange (25) bereitgestellt werden.

13. Betätigungseinrichtung nach Anspruch 12, **dadurch gekennzeichnet, dass** eine Längsmittelachse (3) des Hauptbremszylinders (2), eine Längsmittelachse (26) der Zugstange (25) und die Rotationsachse (12) der Antriebswelle (11) parallel zueinander ausgerichtet sind und in derselben Ebene liegen, wobei der Hauptbremszylinder (2) radial zwischen der Zugstange (25) einerseits und der Antriebswelle (11) andererseits angeordnet ist.

14. Bremsanlage, **gekennzeichnet durch** eine Betätigungseinrichtung (1) gemäß einem der vorhergehenden Ansprüche.

## Claims

1. Actuating device (1) for a brake system, comprising an electric motor (10) which is designed to drive a drive shaft (11) which is mounted so as to be rotatable about an axis of rotation (12), a housing (6) and a master brake cylinder (2) which is rigidly connected to the housing (6), wherein at least one hydraulic piston is mounted so as to be displaceable in the master brake cylinder (2), and wherein the drive shaft (11) is coupled to the hydraulic piston in such a way that the hydraulic piston can be displaced by a rotation of the drive shaft (11), wherein the electric motor (10) is arranged in the housing (6), **characterized in that** the rigid connection between the master brake cylinder (2) and the housing (6) is provided at least in part by the drive shaft (11).

2. Actuating device according to Claim 1, **characterized by** a first bearing (15) designed for transmitting axial forces, which comprises a first bearing ring (19) and a second being ring (20), wherein the first bearing ring (19) is rigidly connected to the master brake cylinder (2), and wherein the second bearing ring (20) is rigidly connected to the drive shaft (11).

3. Actuating device according to either of the preceding claims, **characterized by** a second bearing (16) designed for transmitting axial forces, which comprises a third bearing ring (22) and a fourth bearing ring (23), wherein the third bearing ring (22) is arranged fixed to the housing, and wherein the fourth bearing ring (23) is rigidly connected to the drive shaft (11).

4. Actuating device according to either of Claims 2 and 3, **characterized in that** the first bearing (15) and/or the second bearing (16) are formed as rolling element bearings, in particular tapered roller bearings.

5. Actuating device according to one of Claims 2 to 4, **characterized in that** the housing (6) has a cup-shaped recess (24), wherein the second bearing (16) is arranged in the recess (24).

6. Actuating device according to one of Claims 2 to 5, **characterized in that** the master brake cylinder (2) has a connection flange (17), and **in that** the first bearing ring (19) is rigidly connected to the connection flange (17).

7. Actuating device according to one of the preceding claims, **characterized by** a control unit (38) for controlling the electric motor (10), wherein the connection flange (17) is arranged axially between the electric motor (10) on the one hand and the control unit (38) on the other hand.

8. Actuating device according to Claim 7, **characterized in that** the control unit (38) is electrically connected to a motor winding of the electric motor (10) by at least one electrical line (40), wherein the connection flange (17) has an axial aperture (39) through which the line (40) extends.

9. Actuating device according to one of the preceding claims, **characterized by** at least one securing ring (43) which engages radially in a circumferential groove of the drive shaft (11) in order to axially secure the drive shaft (11).

10. Actuating device according to one of the preceding claims, **characterized by** an actuating element (28) which is guided so as to be displaceable in the housing (6), wherein the guiding of the actuating element (28) is provided at least in part by the electric motor (10).

11. Actuating device according to Claim 10, **characterized by** an anti-rotation plate (29) which is rigidly connected to the actuating element (28), wherein an element of the electric motor (10) that is fixed to the housing has a guide projection (35) which engages in a cutout (36) of the anti-rotation plate (29) in order to guide the actuating element (28).

12. Actuating device according to one of the preceding claims, **characterized in that** the actuating device (1) has a tie rod (25), wherein the rigid connection of the housing (6) to the master brake cylinder (2) and the guiding of the actuating element (28) are each provided in part by the tie rod (25).

13. Actuating device according to Claim 12, **characterized in that** a longitudinal centre axis (3) of the master brake cylinder (2), a longitudinal centre axis (26) of the tie rod (25) and the axis of rotation (12) of the drive shaft (11) are oriented parallel to one another and lie in the same plane, wherein the master brake cylinder (2) is arranged radially between the tie rod (25) on the one hand and the drive shaft (11) on the other hand.

14. Brake system, **characterized by** an actuating device (1) according to one of the preceding claims.

## Revendications

1. Dispositif d'actionnement (1) pour un système de freinage, comprenant un moteur électrique (10) qui est réalisé pour entraîner un arbre d'entraînement (11) monté rotatif autour d'un axe de rotation (12), un carter (6) et un maître-cylindre (2) qui est relié rigidement au carter (6), dans lequel au moins un piston hydraulique est monté coulissant dans le maître-cylindre (2), et dans lequel l'arbre d'entraînement (11) est couplé au piston hydraulique de telle sorte que le piston hydraulique peut être déplacé par une rotation de l'arbre d'entraînement (11), le moteur électrique (10) étant disposé dans le carter (6), **caractérisé en ce que** la liaison rigide entre le maître-cylindre (2) et le carter (6) est fournie au moins proportionnellement par l'arbre d'entraînement (11).

2. Dispositif d'actionnement selon la revendication 1, **caractérisé par** un premier palier (15) réalisé pour transmettre des forces axiales et qui présente une première bague de palier (19) et une deuxième bague de palier (20), la première bague de palier (19) étant reliée rigidement au maître-cylindre (2), et la deuxième bague de palier (20) étant reliée rigidement à l'arbre d'entraînement (11).

3. Dispositif d'actionnement selon l'une quelconque des revendications précédentes, **caractérisé par** un deuxième palier (16) réalisé pour transmettre des forces axiales et qui présente une troisième bague de palier (22) et une quatrième bague de palier (23), la troisième bague de palier (22) étant disposée de manière solidaire du carter, et la quatrième bague de palier (23) étant reliée rigidement à l'arbre d'entraînement (11).

4. Dispositif d'actionnement selon l'une quelconque des revendications 2 et 3, **caractérisé en ce que** le premier palier (15) et/ou le deuxième palier (16) sont réalisés sous forme de palier à éléments roulants, en particulier de palier à roulements coniques.

5. Dispositif d'actionnement selon l'une quelconque des revendications 2 à 4, **caractérisé en ce que** le carter (6) présente un creux (24) en forme de godet, le deuxième palier (16) étant disposé dans le creux (24).

6. Dispositif d'actionnement selon l'une quelconque des revendications 2 à 5, **caractérisé en ce que** le maître-cylindre (2) présente une bride de raccordement (17), et **en ce que** la première bague de palier (19) est reliée rigidement à la bride de raccordement (17).

7. Dispositif d'actionnement selon l'une quelconque des revendications précédentes, **caractérisé par** un appareil de commande (38) pour piloter le moteur électrique (10), la bride de raccordement (17) étant disposée axialement entre le moteur électrique (10) d'une part et l'appareil de commande (38) d'autre part.

8. Dispositif d'actionnement selon la revendication 7, **caractérisé en ce que** l'appareil de commande (38) est relié électriquement par au moins une ligne électrique (40) à un enroulement de moteur du moteur électrique (10), la bride de raccordement (17) présentant un passage axial (39) à travers lequel s'étend la ligne (40).

9. Dispositif d'actionnement selon l'une quelconque des revendications précédentes, **caractérisé par** au moins une bague de retenue (43) qui vient en prise radialement avec une rainure périphérique de l'arbre d'entraînement (11) pour retenir axialement l'arbre d'entraînement (11).

10. Dispositif d'actionnement selon l'une quelconque des revendications précédentes, **caractérisé par** un élément d'actionnement (28) qui est guidé de manière coulissante dans le carter (6), le guidage de l'élément d'actionnement (28) étant fourni au moins proportionnellement par le moteur électrique (10).

11. Dispositif d'actionnement selon la revendication 10, **caractérisé par** une plaque antirotation (29) reliée rigidement à l'élément d'actionnement (28), dans lequel un élément, solidaire du carter, du moteur électrique (10) présente une saillie de guidage (35) qui vient en prise radialement avec un évidement (36) de la plaque antirotation (29) pour guider l'élément d'actionnement (28).

12. Dispositif d'actionnement selon l'une quelconque des revendications précédentes, **caractérisé en ce que** le dispositif d'actionnement (1) présente une barre de traction (25), dans lequel la liaison rigide entre le carter (6) et le maître-cylindre (2) ainsi que le guidage de l'élément d'actionnement (28) sont respectivement fournis proportionnellement par la barre de traction (25).

13. Dispositif d'actionnement selon la revendication 12, **caractérisé en ce qu'**un axe central longitudinal (3) du maître-cylindre (2), un axe central longitudinal (26) de la barre de traction (25) et l'axe de rotation (12) de l'arbre d'entraînement (11) sont alignés en parallèle les uns aux autres et sont situés dans le même plan, le maître-cylindre (2) étant disposé radialement entre la barre de traction (25) d'une part et l'arbre d'entraînement (11) d'autre part.

14. Système de freinage, **caractérisé par** un dispositif d'actionnement (1) selon l'une quelconque des revendications précédentes.
